# EUROPÄISCHE PATENTANMELDUNG

(11) **EP 2 772 352 A1**
(43) Veröffentlichungstag der Anmeldung: **03.09.2014**
(21) Anmeldenummer: 13157113.5
(22) Anmeldetag: 28.02.2013
(51) Int. Cl.: B32B 21/02, B44C 5/04, C08L 97/02

(54) **Neuartiger holzhaltiger Werkstoff**

(71) Anmelder: Akzenta Paneele + Profile GmbH, 56759 Kaisersesch (DE)
(72) Erfinder: Hannig, Hans-Jürgen, 51427 Bergisch-Gladbach (DE)
(74) Vertreter: Michalski Hüttermann & Partner Patentanwälte mbB

(57) **Zusammenfassung**

Die vorliegende Erfindung betrifft einen neuartigen holzhaltigen Werkstoff. Der erfindungsgemäße Werkstoff enthält dabei neben einem thermoplastischen Kunststoff einen Holzfaserwerkstoff, welcher seinerseits neben Holzfasern einen Anteil eines ausgehärteten duroplastischen Kunststoffs aufweist.

## Beschreibung

Die vorliegende Erfindung betrifft einen neuartigen holzhaltigen Werkstoff. Der erfindungsgemäße Werkstoff enthält dabei neben einem thermoplastischen Kunststoff einen Holzfaserwerkstoff, welcher seinerseits neben Holzfasern einen Anteil eines ausgehärteten duroplastischen Kunststoffs aufweist.

Mischwerkstoffe auf Basis von Kunststoffen und Holz sind seit längerer Zeit bekannt. So sind beispielsweise Holzfaserplatten in unterschiedlichen Ausgestaltungen, wie beispielsweise mitteldichte Holzfaserplatten (MDF-Platten) oder hochdichte Holzfaserplatten (HDF-Platten), Flachpressplatten (Spanplatten) oder OSB-Platten (oriented strand board) bekannt, welche durch Verpressen entsprechender Holzfasern oder -späne mit einem meist wärme- und/oder druckhärtenden Kunststoffharz gewonnen werden. Darüber hinaus sind sogenannte Wood-Plastic-Composite (WPC) Werkstoffe bekannt. Dabei handelt es sich um thermoplastisch verarbeitbare Verbundwerkstoffe auf Basis von Holzmehlen und thermoplastischer Kunststoffe, welchen gegebenenfalls noch weitere Additive zugesetzt seien können.

Solche WPC sind beispielsweise aus der EP 1 664 193 B2 bekannt, in welcher ein WPC auf Basis vom Holzmehl und Polyethylenterephthalat beschrieben wird. Auch in der DE2 422 978 A1 wird bereits ein Holz-Verbundwerkstoff auf Basis von Holzmehl und Polyvinylchlorid beschrieben.

Die beschrieben Holz-Verbundwerkstoffe haben die Vorteil, dass sie mit den aus dem Gebiet der Kunststoffverarbeitung bekannten Umformmitteln, wie beispielsweise Strangextrudieren, Spritzgießen, Rotationsgießen oder auch Thermoformverfahren bearbeitet werden können und so gegenüber reinen Holzwerkstoffen eine hohe Gestaltungsfreiheit bei der Formgebung erlauben.

Ein Nachteil der aus dem Stand der Technik bekannten Holz-Verbundwerkstoffe ist es, dass die eingesetzten Holzmehle oder -späne von unbehandeltem Rohholz stammen müssen, was aufgrund seiner hohen Nachfrage in unterschiedlichen Bereichen starken Preisschwankungen unterliegen kann.

Es ist daher die Aufgabe der vorliegenden Erfindung, einen holzhaltigen Werkstoff anzugeben, welcher auf Basis alternativer Holzfaserquellen herstellbar ist, sowie ein Verfahren zur Herstellung eines solchen Werkstoffes.

Gelöst wir diese Aufgabe durch einen holzhaltigen Werkstoff gemäß Anspruch 1 sowie ein Verfahren gemäß Anspruch 7. Alternative Ausgestaltungen finden sich in den abhängigen Ansprüchen und der nachfolgen Beschreibung.

Es wird somit ein holzhaltiger Werkstoff vorgeschlagen, enthaltend, bezogen auf den holzhaltigen Werkstoff:
A) ≥40 Gew.-% bis ≤70 Gew.-% eines thermoplastischen Kunststoffs;
B) ≥35 Gew.-% bis ≤70 Gew.-% eines Duroplast-haltigen Holzfaserwerkstoffs;
C) ≥0 Gew.-% bis ≤25 Gew.-% eines oder mehrerer Zuschlagsstoffe.

Überraschender Weise hat sich gezeigt, dass ein holzhaltiger Werkstoff auf Basis eines thermoplastischen Kunststoffs und eines Duroplast-haltigen Holzfaserwerkstoffes hervorragende mechanische und verarbeitungstechnische Eigenschaften zum Einsatz insbesondere in der Möbel und Dekorpaneel-Industrie aufweist.

Gemäß einer bevorzugten Ausgestaltung der Erfindung beträgt der Anteil des thermoplastischen Kunststoffs im Werkstoff zwischen ≥45 Gew.-% bis ≤60 Gew.-%, insbesondere zwischen ≥50 Gew.-% und ≤55 Gew.-%, während der Anteil des Duroplast-haltigen Holzwerkstoffes bevorzugt zwischen ≥40 Gew.-% bis ≤65 Gew.-%, insbesondere zwischen ≥45 Gew.-% bis ≤60 Gew.-% liegt. In einer insbesondere bevorzugten Ausgestaltung der Erfindung liegt sowohl der Anteil des thermoplastischen Kunststoffs als auch der Anteil des Duroplast-haltigen Holzwerkstoffes bei jeweils 50 Gew.-%.

Gemäß einer Ausgestaltung der Erfindung ist der thermoplastische Kunststoff wenigstens ein Kunststoff aus der Gruppe bestehend aus Polyvinylchlorid (PVC), Polyethylen (PE), Polypropylen (PP), Polyamide (PA), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK), Polyisobutylen (PIB), Polybutylen (PB) oder Mischungen oder Co-Polymerisate dieser. Dabei ist es insbesondere bevorzugt, wenn als thermoplastischer Kunststoff ein PVC, ein PE, ein PP oder eine Mischung dieser eingesetzt wird. Darüber hinaus kann der thermoplastische Kunststoff auch ein substituiertes oder unsubstituiertes Polyolefin umfassen. Dabei ist unter dem Begriff substituiertes Polyolefin ein Sinne der Erfindung ein Alkyl-, Aryl-, Hetroaryl und/oder Halogen-substituiertes Polyolefin zu verstehen.

Gemäß einer weiteren Ausgestaltung der Erfindung kann der eingesetzte thermoplastische Kunststoff auch aus Recyclisierungsquellen stammen. Dabei können sortenreine oder sortengemischte Recycling-Kunststoffe eingesetzt werden.

Gemäß einer besonders bevorzugten Ausgestaltung der Erfindung ist der holzhaltige Werkstoff dabei im Wesentlichen frei von organischen Weichmachern, insbesondere frei von Weichmachern auf Phthalat-Basis, wie z.B. Diethylhexylphthalat (DEHP) oder Dioctylphthalat (DOP).

Duroplast-haltigen Holzfaserwerkstoffe welche insbesondere im dem erfindungsgemäßen Werkstoff enthalten seinen können sind bevorzugt solche, die einen Duroplast ausgewählt aus der Gruppe bestehend aus Harnstoffharz, Melaminharz, Phenolharz, Harnstoff-Formaldehydharz, Formaldehydharz, polymeres Diphenylmethandiisocyanat (PMDI) und Mischungen dieser enthalten. Solche Duroplast-haltigen Holzfaserwerkstoffe können dabei insbesondere aus der Verarbeitung und/oder Bearbeitung von Holzfaserplatten, wie insbesondere MDF-Platten und/oder HDF-Platten stammen. Bisher fallen im Bereich der Ver- bzw. Bearbeitung solcher MDF- und/oder HDF-Platten Mehle und Stäube an, die aufgrund ihres Duroplastgehaltes lediglich der thermischen Verwertung zugeführt werden konnten. Insbesondere werden solche MDF- und/oder HDF-Platten im Bereich der Möbelindustrie oder der Dekorplattenherstellung als Trägerplatten für Laminate eingesetzt. Die in diesen Industriebereichen anfallende Menge an Bruch, Plattenresten, Mehlen und Stäuben liegt im Bereich von mehreren 10.000 Jahrestonnen bis deutlich über 100.000 Jahrestonnen. Hierdurch sind die anfallenden Reststoffe in großen Mengen und zu günstigen Preisen als Rohstoff verfügbar.

Die so verfügbaren Rohstoffe, wie beispielsweise Bruch, Plattenreste, Mehle und Stäube enthalten dabei einen Duroplast-Anteil in einem Bereich zwischen ≥6 Gew.-% bis ≤12 Gew.-% und einen Holzfaseranteil zwischen ≥80 Gew.-% bis ≤94 Gew.-%, was dem Duroplast- bzw. Holzanteil in den MDF- und/oder HDF-Platten entspricht.

Gemäß einer weiter bevorzugten Ausgestaltung der Erfindung weist der Duroplast-haltige Holzfaserwerkstoff einen mittleren Korndurchmesser d₅₀ zwischen ≥0,05mm und ≤1mm, vorzugsweise zwischen ≥0,1mm und ≤0,8mm auf. Es hat sich gezeigt, dass bei Einsatz eines Duroplast-haltigen Holzfaserwerkstoffs mit einem solchen mittleren Korndurchmesser eine optimierte Durchmischung der Bestandteile des erfindungsgemäßen holzhaltigen Werkstoffes erreicht werden kann, welche sich vorteilhaft auf die mechanischen Eigenschaften des Werkstoffs auswirkt. Insbesondere hat sich gezeigt, dass so eine im Wesentlichen vollständige Ummantelung der Duroplast-haltigen Holzfaserwerkstoffpartikel erreicht werden kann, wodurch der erfindungsgemäße Werkstoff insbesondere Feuchtigkeitsbeständig ist und ein sehr niedriges Quellverhalten im einem Bereich ≤0,5-% zeigt.

Der erfindungsgemäße holzhaltige Werkstoff kann optional ein oder mehrere Zuschlagstoffe oder Additive enthalten, wobei die Anteil dieser Stoffen in einem Bereich zwischen ≥0 Gew.-% bis ≤25 Gew.-% liegen kann. Beispiele für geeignet Zuschlagstoffe sind Füllstoffe wie beispielsweise Kreide, Talkum, Kaolin, Kaolinit, Glimmer, Wollastonit, Dolimit, Baryt, Quarz, Bariumsulfat, Fluorit (Flussspat), Calciumsulfat (Gips), Titandioxid, Glas oder Mischungen dieser. Dabei kann der Füllstoff bevorzugt einen mittleren Korndurchmesser d₅₀ ≤ 150µm, vorzugsweise ≤ 100µm, weiter bevorzugt ≤ 80µm, noch bevorzugter ≤ 50µm, insbesondere ≤ 10µm, wie zum Beispiel zwischen 2µm und 4µm aufweisen. Insbesondere ist es bevorzugt, dass der mittlere Korndurchmesser d₅₀ des Füllstoffes in einem Bereich des mittleren Korndurchmessers d₅₀ des eingesetzten Duroplast-haltigen Holzfaserwerkstoffes liegt. Bei der Verwendung von Glas als Füllstoff kann dieses besonderes bevorzugt als Glasbruch und/oder Glasmehl und/oder in Form von Glasmikrokugeln eingesetzt werden. Gemäß einer bevorzugten Ausgestaltung der Erfindung weist der Füllstoff eine Mohshärte in einem Bereich zwischen ≥ 2,0 und ≤ 7,0, vorzugsweise zwischen ≥ 2,0 und ≤ 4,0 auf.

Als Füllstoffe können darüber hinaus geeignet aufbereitetet Duroplastenabfälle, wie beispielsweise Melamin-, Harnstoff-, oder Phenolharzabfälle eingesetzt werden.

Beispiele für optional in dem erfindungsgemäßen holzhaltigen Werkstoff enthaltene Additive sind z.B. Stabilisatoren, Pigmente, Wachse, Öle, oder Fungizide. Dabei können Stabilisatoren insbesondere zur Verbesserung der UV-Stabilität zugegeben werden. Beispiele für solche UV-Stabilisatoren sind z.B. HALS (hindered amine light stabilizers), Benzophenone oder Benzotriazole. Pigmente können im dem erfindungsgemäßen Werkstoff zur Einfärbung des Werkstoffs enthalten sein. Beispiele für geeignete Pigmente sind Titandioxid oder Eisenoxidpigmente. Beispiele für in dem erfindungsgemäßen Werkstoff einsetzbare Fungizide sind Triazole, Imidazole oder Morpholine. Wachse und Öle können in dem erfindungsgemäßen Werkstoff zur Verbesserung der Verarbeitungsfähigkeit, beispielsweise zur Reduktion der Friktion beim Spritzgießen oder Strangextrudieren enthalten sein. Beispiele für geeignete Wachse und Öle sind Fettsäuresalze, Metallstearate oder Castoröl. Auch kann es vorgesehen sein, dass der erfindungsgemäße Werkstoff Flammschutzmittel wie beispielsweise polybromierte Diphenylether (PBDE), phosphorhaltige Verbindungen und/oder Aluminiumhydroxid ausweist.

Gemäß einer weiteren Ausgestaltung der Erfindung kann der Werkstoff darüber hinaus Porenbildener, wie beispielsweise Schäumungsmittel, Blähmittel oder der gleichen enthalten, mit Hilfe welcher die Rohdichte des erfindungsgemäßen Werkstoffs einstellbar ist.

Desweiteren wird mit der Erfindung ein Verfahren zur Herstellung eines holzhaltigen Werkstoffs vorgeschlagen, aufweisen die Verfahrensschritte:
- Bereitstellen eines thermoplastischen Kunststoffs;
- Bereitstellen eines Duroplast-haltigen Holzfaserwerkstoffs;
- Mischen des bereitgestellten thermoplastischen Kunststoffs und des Duroplast-haltigen Holzfaserwerkstoffs bei einer Temperatur oberhalb der Schmelztemperatur des thermoplastischen Kunststoffs und unterhalb der Zersetzungstemperatur des im Duroplast-haltigen Holzfaserwerkstoff enthaltenen Duroplasten und einem Druck im Bereich zwischen ≥10 MPa und ≤45 MPa; und
- Extrudieren oder Granulieren der so erhaltenen Mischung

Es hat sich gezeigt, dass unter den beschriebenen Verfahrensbedingungen in einfacher und günstiger Weise ein holzhaltiger Werkstoff bereitgestellt werden kann, welcher sich in vielfältiger Weise in unterschiedlichen Industriebereichen vorteilhaft einsetzten lässt.

Gemäß einer bevorzugten Ausgestaltung des Verfahrens wird das Verfahren ohne Wärmezuführung durchgeführt und die zum Erreichen der Schmelztemperatur notwendige Wärme wird durch den aufgebauten Druck und die zwischen den Komponenten auftretende Reibung erreicht.

Bevorzugt wird das Mischen im Rahmen des erfindungsgemäßen Verfahrens in einem Doppelschneckenextruder durchgeführt. Dieser erlaubt ein Mischen der bereitgestellten Bestandteile unter Aufbau eines gewünschten Drucks sowie der gewünschten Temperatur. Sofern das mittels des erfindungsgemäßen Verfahrens hergestellte Material nach dem Mischen direkt in Form es weiterzuverarbeitenden Halbzeuges, wie beispielsweise einer Trägerplatte für ein Dekorpaneel, überführt werden soll, kann es erfindungsgemäß vorgesehen sein, dass der noch schmelzflüssige Werkstoff über eine Hochdruckpumpe vom Doppelschneckenextruder an eine Schlitzdüse weitergeleitet, an welcher eine entsprechende Extrudierung stattfindet. Die so extrudierte Endlosplatte kann anschließend in einem Kalander kalibriert und gekühlt werden. Danach kann die Platte aufgeteilt und zwischengelagert werden, bevor sie einer weiteren Bearbeitung zugeführt wird.

Gemäß einer weiteren Ausgestaltung des erfindungsgemäßen Verfahrens wird zum Mischen und erwärmen der eingesetzten Rohstoffe, also des thermoplastischen Kunststoffes, des Duroplast-haltigen Holzfaserwerkstoffs und ggf. weiterer Additive oder Zuschlagsstoffe ein Planetwalzenextruder eingesetzt. Dabei kann es auch vorgesehen sein, dass die eingesetzten Rohstoffe vor der Zuführung zum Extruder in einer Vormischeinrichtung vorgemischt und/oder homogenisiert werden. Sofern das mittels des erfindungsgemäßen Verfahrens hergestellte Material nach dem Mischen direkt in Form es weiterzuverarbeitenden Halbzeuges, wie beispielsweise einer Trägerplatte für ein Dekorpaneel, überführt werden soll, kann es erfindungsgemäß vorgesehen sein, dass der noch schmelzflüssige Werkstoff über eine Hochdruckpumpe vom Doppelschneckenextruder an eine Schlitzdüse weitergeleitet, an welcher eine entsprechende Extrudierung stattfindet. Die so extrudierte Endlosplatte kann anschließend in einem Kalander kalibriert und gekühlt werden. Danach kann die Platte aufgeteilt und zwischengelagert werden, bevor sie einer weiteren Bearbeitung zugeführt wird.

Alternativ kann es vorgesehen sein, dass der Werkstoff am Ende des Mischvorganges granuliert wird und das so gewonnene Granulat später einer weiteren Verarbeitung zugeführt wird. Dabei kann das Granulat sowohl unter Verwendung von Spritz- oder Rotationsgusstechniken weiterverarbeitet werden oder als Granulat auch beispielsweise einer kontinuierlichen Doppelbandpresse oder einer Kurztaktpresse zugeführt werden, in welcher es zu entsprechenden Endlosplatten thermisch umgeformt wird. Gemäß einer bevorzugten Ausgestaltung des Verfahrens ist es besonders bevorzugt, wenn die Pressflächen eine inerte, temperaturbeständige Kunststoffoberfläche, wie z.B. eine Polytetrafluorethylen-Oberfläche aufweisen.

Zur Herstellung von Halbzeugen, wie beispielsweise Trägerplatten kann es auch vorgesehen sein, dass dar granulierte erfindungsgemäße Werkstoff auf eine Folie oder ein Vlies aufgestreut wird, welche dann einen Bestandteil des herzustellenden Halbzeuges bilden.

Der erfindungsgemäße Werkstoff kann als Ausgangsmaterial für unterschiedlichste Produkte, wie beispielsweise Fassadenelemente, Balkon- und Gartenprodukte, Brettprofile, Möbel etc, eingesetzt werden.

Der erfindungsgemäße holzhaltige Werkstoff kann gemäß eines weiteren Gesichtspunkts der Erfindung insbesondere zur Herstellung von Trägerplatten für Dekorpaneele verwendet werden.

Unter dem Begriff Dekorpaneel sind im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

In Anhängigkeit des gewünschten Einsatzbereiches der Dekorpaneele können diese aus unterschiedlichen Materialen gefertigt sein. Insbesondere kann dabei das Material des Trägers in Abhängigkeit des Einsatzbereichs gewählt sein. So kann der Träger beispielsweise aus einem Holzwerkstoff bestehen, sofern das Dekorpaneele keiner übermäßigen Feuchtigkeit oder Witterungsbedingungen ausgesetzt ist. Soll das Paneel hingegen z.B. in Feuchträumen oder im Außenbereich eingesetzt werden, kann der Träger insbesondere aus dem erfindungsgemäßen holzhaltigen Werkstoff bestehen, welcher sich durch seine Feuchtigkeitsbeständigkeit auszeichnet.

Zur Aufbringung eines Dekors auf die Trägerplatte bzw. einen plattenförmigen Träger ist es bekannt, ein mit einem entsprechenden Dekor bedrucktes Dekorpapier auf den plattenförmigen Träger aufzubringen, z.B. mittels einer zuvor auf den plattenförmigen Träger aufgebrachten Harzschicht als Verbindungsmittel. Darüber hinaus ist es bekannt, Dekorpaneele im sogenannten Direktdruck mit einem Dekor zu versehen.

Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Zum Schutz der aufgebrachten Dekorschicht sind in der Regeln Verschleiß- oder Deckschichten oberhalb der Dekorschicht aufgebracht. Eine Verschleiß- und/oder Deckschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Bevorzugt wird dabei zur Herstellung einer Trägerplatte für ein Dekorpaneel der erfindungsgemäße holzhaltige Werkstoff derart verdichtet, dass Trägerplatten mit einer Dichte von ≥ 800 kg/m³ erhalten werden.

Insbesondere zeichnet sich eine unter Verwendung des erfindungsgemäßen holzhaltigen Werkstoffes hergestellte Trägerplatte für ein Dekorpaneel dadurch aus, dass ein unter Verwendung der erfindungsgemäßen Trägerplatte hergestelltes Dekorpaneel einen Resteindruck gemäß DIN EN 649 von ≤ 0,05mm, vorzugsweise ≤ 0,01mm aufweist. Darüber hinaus besteht eine unter Verwendung einer solchen Trägerplatte hergestellte Dekorpaneele einen Kugelfalltest gemäß DIN EN 438 aus einer Höhe ≥ 1000mm, vorzugsweise ≥ 1400mm. Auch zeigt ein unter Verwendung einer solchen Trägerplatte hergestelltes Dekorpaneel eine Eindringtiefe ≤ 0,15mm bei einem an die DIN EN 438 angelehnten Falltest aus 600mm Höhe mit einer Stahlkugel mit einem Gewicht von 224g.

Im Anschluss an die Herstellung der Trägerplatte kann bevorzugt eine direkte Weiterverarbeitung der Trägerplatte zum Dekorpaneel erfolgen, wobei vorzugsweise unter Verwendung eines Direktdruckverfahrens oder einer Dekorfolienkaschierung ein Dekor auf die Trägerplatte direkt oder einen zuvor auf die Trägerplatte aufgebrachten Druckuntergrund erfolgt. Dabei ist es insbesondere bevorzugt, wenn das Dekor mittels eines Digitaldruckverfahrens, vorzugsweise unter Verwendung von strahlungshärtbaren Farben, aufgebracht wird. Dies erlaubt durch die kurze Trocknungs- bzw. Aushärtungszeit der Farbe eine hochintegrative Ausgestaltung des Herstellungsverfahrens, ausgehend vom Rohmaterial für die Dekorpaneelträgerplatte bis zum fertig dekorierten Paneel.

Desweiteren kann es vorgesehen sein, dass vor der Aufbringung der Dekorschicht ein Druckuntergrund auf den plattenförmigen Träger aufgebracht wird. Dabei kann es insbesondere vorgesehen sein, dass als Druckuntergrund eine Zusammensetzung aufgebracht wird, welche zum einen radikalisch härtende Bestandteile und zum anderen Polyurethananteile aufweist, wie dies beispielsweise aus Dual-Cure Lacksystemen bekannt ist. Dabei kann es insbesondere vorgesehen sein, dass der Druckuntergrund Urethanacrylate enthält. Darüber hinaus kann der Druckuntergrund insbesondere Pigmente, wie beispielsweise Titandioxid enthalten.

Dem Aufbringen des Dekors vor- oder nachgeschaltet kann eine Profilierung der Kanten vorgesehen sein, bei welcher mittels beispielsweise spanabhebender Verfahren funktionale und/oder Dekorative Profile zumindest entlang einer Kante der Trägerplatte eingebracht werden. Dabei können die funktionalen Profile derart ausgestaltet werden, dass mittels dieser einzelne Paneele lösbar miteinander verbinden lassen, um eine bei Verlegen eine verbundene Verlegefläche auszubilden. Dekorative Profile können beispielsweise zur Ausbildung einer V-Fuge oder Landhaus-Fuge zwischen zwei benachbarten Paneelen in der Verlegefläche eingebracht werden.

Desweiteren kann es erfindungsgemäß vorgesehen sein, dass auf das Dekor bzw. die das Dekor ausbildende Farbschicht eine Deck- und/oder Verschleißschutzschicht aufgebracht wird. Dabei kann es insbesondere vorgesehen sein, dass eine verschleißfeste Lackschicht, vorzugsweise auf Basis eines strahlungshärtbaren Lackes, auf die Dekorfarbschicht aufgebracht und getrocknet bzw. ausgehärtet wird. Auch dies unterstützt die Integration des Herstellungsverfahrens zu einem In-Line Fertigungsprozess an dessen Ende ein endfertiges Dekorpaneel steht. Zusammen mit der Dekorfarbschicht bzw. der Dekorfolie und/oder mit der Verschleißschutzschicht kann ein Gegenzug auf der dem Dekor gegenüberliegenden Seite der Trägerplatte aufgebracht werden, um einen Verzug des Paneels z.B. durch sogenanntes Schüsseln zu vermeiden. Dazu kann es insbesondere vorgesehen sein, dass eine Gegenzugfolie oder eine Lackschicht aufgebracht wird.

Gemäß einer bevorzugten Ausgestaltung kann das Dekorpaneel zwischen der Trägerplatte und der Dekorschicht, einen Druckuntergrund und/oder auf der Dekorschicht eine Deck-und/oder Verschleißschutzschicht und/oder auf der der Dekorschicht gegenüberliegenden Seite der Trägerplatte einen Gegenzug aufweisen. Dabei kann es insbesondere vorgesehen sein, dass die Deck- und/oder Verschleißschutzschicht und/oder der Gegenzug aus einer strahlungshärtbaren, vorzugsweise transparenten oder transluzenten Zusammensetzung ausgebildet sind.

Gemäß einer weiteren Ausgestaltung kann es vorgesehen sein, dass das Dekorpaneel zumindest in einen Randbereich der Trägerplatte eine Profilierung aufweist. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird. Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

## Patentansprüche

1. Holzhaltiger Werkstoff, enthaltend, bezogen auf den holzhaltigen Werkstoff:
A) ≥40 Gew.-% bis ≤70 Gew.-% eines thermoplastischen Kunststoffs;
B) ≥35 Gew.-% bis ≤70 Gew.-% eines Duroplast-haltigen Holzfaserwerkstoffs;
C) ≥0 Gew.-% bis ≤25 Gew.-% eines oder mehrerer Zuschlagstoffe oder Additive.

2. Werkstoff gemäß Anspruch 1, wobei der thermoplastische Kunststoff wenigstens ein Kunststoff aus der Gruppe bestehend aus Polyvinylchlorid (PVC), Polyethylen (PE), Polypropylen (PP), Polyamide (PA), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK), Polyisobutylen (PIB), Polybutylen (PB) oder Mischungen oder Co-Polymerisate dieser ist.

3. Werkstoff gemäß einem der vorhergehenden Ansprüche, wobei der Duroplast-haltige Holzfaserwerkstoff einen Duroplastanteil zwischen ≥6 Gew.-% bis ≤12 Gew.-% und einen Holzfaseranteil zwischen ≥80 Gew.-% bis ≤94 Gew.-% aufweist.

4. Werkstoff gemäß Anspruch 3, wobei der Duroplast ausgewählt ist aus der Gruppe bestehend aus Harnstoffharz, Melaminharz, Phenolharz, Harnstoff-Formaldehydharz, Formaldehydharz, polymeres Diphenylmethandiisocyanat (PMDI) und Mischungen dieser.

5. Werkstoff gemäß einem der vorhergehenden Ansprüche, wobei der Duroplast-haltige Holzfaserwerkstoff einen mittleren Korndurchmesser d₅₀ zwischen ≥0,05mm und ≤1mm, vorzugsweise zwischen ≥0,1mm und ≤0,8mm aufweist.

6. Werkstoff gemäß einem der vorhergehenden Ansprüche, wobei dieser als Duroplast-haltigen Holzfaserwerkstoff Bruch, Plattenreste, Schleif- und/oder Frässtäube aus der Verarbeitung und/oder Bearbeitung von MDF- und/oder HDF-Platten aufweist.

7. Verfahren zur Herstellung eines holzhaltigen Werkstoffs aufweisen die Verfahrensschritte:
- Bereitstellen eines thermoplastischen Kunststoffs;
- Bereitstellen eines Duroplast-haltigen Holzfaserwerkstoffs;
- Mischen des bereitgestellten thermoplastischen Kunststoffs und des Duroplast-haltigen Holzfaserwerkstoffs bei einer Temperatur oberhalb der Schmelztemperatur des thermoplastischen Kunststoffs und unterhalb der Zersetzungstemperatur des im Duroplast-haltigen Holzfaserwerkstoff enthaltenen Duroplasten und einem Druck im Bereich zwischen ≥10 MPa und ≤45 MPa; und
- Extrudieren oder Granulieren der so erhaltenen Mischung.

8. Verfahren gemäß Anspruch 7, wobei als thermoplastischer Kunststoff wenigstens ein Kunststoff aus der Gruppe bestehend aus Polyvinylchlorid (PVC), Polyethylen (PE), Polypropylen (PP), Polyamide (PA), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser bereitgestellt wird.

9. Verfahren gemäß Anspruch 7 oder 8, wobei als Duroplast-haltiger Holzfaserwerkstoff Schleif- und/oder Frässtäube mit einem mittleren Korndurchmesser d₅₀ zwischen ≥0,05mm und ≤1mm, vorzugsweise zwischen ≥0,1mm und ≤0,8mm eingesetzt werden.

10. Verfahren gemäß Anspruch 9, wobei als Duroplast-haltiger Holzfaserwerkstoff Schleif- und/oder Frässtäube aus der Verarbeitung und/oder Bearbeitung von MDF-und/oder HDF-Platten.

11. Verfahren gemäß einem der Ansprüche 7 bis 10, wobei das Mischen in einem Doppelschneckenextruder oder einem Planetwalzenextruder durchgeführt wird.

12. Verwendung eines holzhaltigen Werkstoffs gemäß einem der Ansprüche 1 bis 6 zur Herstellung einer Trägerplatte für ein Dekorpaneel.

13. Verwendung gemäß Anspruch 11 zur Herstellung eines Dekorpaneels mit einer direktbedruckten Dekorschicht.

14. Verwendung gemäß einem der Ansprüche 11 und 12 zur Herstellung eines Dekorpaneels welches zumindest in einem Randbereich des plattenförmigen Trägers eine Profilierung aufweist.

15. Verwendung gemäß Anspruch 13, wobei die Profilierung derart ausgestaltete ist, dass mehrere Dekorpaneele mittels korrespondierender Profile miteinander lösbar verbindbar sind.
